# EUROPÄISCHE PATENTSCHRIFT

(11) **EP 0 865 218 B1**
(45) Veröffentlichungstag und Bekanntmachung des Hinweises auf die Patenterteilung: **20.12.2006**
(21) Anmeldenummer: 98103015.8
(22) Anmeldetag: 20.02.1998
(51) Int. Cl.: H04Q 7/24, H04Q 7/38, H04Q 3/00, H04M 3/42

(54) **Verfahren und Mobil-Kommunikationssystem zum Unterstützen der Übertragbarkeit einer Mobilteilnehmerrufnummer**
Method and mobile communication system for supporting mobile subscriber number portability
Procédé et système de communication mobile supportant le transport d'un numéro d'abonné mobile

(30) Priorität: 10.03.1997 DE 19709711
(43) Veröffentlichungstag der Anmeldung: 16.09.1998
(73) Patentinhaber: SIEMENS AKTIENGESELLSCHAFT, 80333 München (DE)
(72) Erfinder: Postmann, Erwin, 7212 Forchenstein (AT)

(56) Entgegenhaltungen:
- WO-A-97/08912
- WO-A-97/36450
- WO-A-97/36451

## Beschreibung

Die Erfindung betrifft ein Verfahren und ein Mobil-Kommunikationssystem zum Unterstützen der Übertragbarkeit einer Mobilteilnehmerrufnummer bei einem Wechsel eines mobilen Teilnehmers von einem bisherigen Mobil-Kommunikationssystem, das den registrierten mobilen Teilnehmer freigibt, zu einem neuen Mobil-Kommunikationssystem, das den mobilen Teilnehmer aufnimmt.

Es ist allgemein bekannt, einem mobilen Teilnehmer eines Mobil-Kommunikationssystems eine Mobilteilnehmerrufnummer (Mobile Subscriber ISDN Number) zuzuweisen, mit der Verbindungen zu ihm initiiert werden können - siehe z.B. "Mobilfunk und Intelligente Netze", Jacek Biala, Vieweg Verlag, 1995, Seite 83. Die Mobilteilnehmerrufnummer wird in einem Mobil-Kommunikationssystem für mehrere Funktionen genutzt. So empfängt eine Vermittlungseinrichtung die Mobilteilnehmerrufnummer bei einem ankommenden Anruf, um anschließend anhand dieser Nummer eine Datenbasis - z. B. ein Heimatregister - zur Abfrage von Routinginformationen für die Anrufverbindung zu dem mobilen Teilnehmer zu adressieren. Die Mobilteilnehmerrufnummer eignet sich darüber hinaus zur Unterscheidung der Art der ankommenden Anrufe, d.h. ob es sich um eine Anrufverbindung für Sprache, Daten, Fax usw. handelt, sowie zur Identifikation des anrufenden Teilnehmers bei einem abgehenden Anruf. Die Abfrage der Datenbasis (Interrogation) dient dazu, den momentanen Aufenthaltsort des beweglichen Teilnehmers zu erfahren, um eine Verbindung zu der für den Teilnehmer aktuell zuständigen Vermittlungseinrichtung im Mobil-Kommunikationssystem aufbauen zu können, siehe auch die WO-A-97/08912.

Allgemein ist eine Zunahme der Mobil-Kommunikationssysteme innerhalb eines Landes auf nationaler Ebene, aber auch international über Landesgrenzen hinweg erkennbar. Dabei handelt es sich technisch - wie beim GSM-System (Global System for Mobile Communication) - um ein länderübergreifendes internationales Kommunikationssystem, das verwaltungstechnisch aber in mehrere Mobil-Kommunikationssysteme mit entsprechenden Betreibern und/oder Diensteanbieter aufgeteilt ist. So sind bereits innerhalb eines Landes mehrere Mobil-Kommunikationssysteme aufgebaut, die von verschiedenen Betreibern (network operator) verwaltet werden und in denen jeweils Dienste auch innerhalb des jeweiligen Kommunikationssystems von verschiedenen Diensteanbietern (service provider) angeboten werden können.

Bei einem Wechsel des mobilen Teilnehmers von einem bisherigen Mobil-Kommunikationssystem, von dem er freigegeben wird, in ein anderes Mobil-Kommunikationssystem, von dem er aufgenommen wird, kann es für den Teilnehmer gewünscht bzw. vorteilhaft sein, seine bisherige Mobilteilnehmerrufnummer beizubehalten, sodaß er in jedem Fall auch unter der alten Rufnummer bei Registration im neuen Mobil-Kommunikationssystem erreichbar ist.

Daher ist es Aufgabe der Erfindung, eine Übertragbarkeit der Mobilteilnehmerrufnummer - auch als Rufnummernportabilität bezeichnet - zwischen Mobil-Kommunikationssystemen mit möglichst einfachen Mitteln und wenig Zusatzaufwand für das bisherige Mobil-Kommunikationssystem zu unterstützen

Diese Aufgabe wird gemäß der Erfindung durch ein Verfahren mit den Merkmalen des Patentanspruchs 1 und durch ein Mobil-Kommunikationssystem mit den Merkmalen des Patentanspruchs 7 gelöst. Weiterbildungen sind in den Unteransprüchen angegeben.

Demnach empfängt die Vermittlungseinrichtung des bisherigen Mobil-Kommunikationssystems die zum Initiieren einer Anrufverbindung zum mobilen Teilnehmer benutzte bisherige Mobilteilnehmerrufnummer und benutzt sie zumindest zur Abfrage der Datenbasis, um Routinginformationen für die Anrufverbindung anzufordern. An Stelle der Routinginformationen sendet die Datenbasis eine Steuerinformation zur Vermittlungseinrichtung, die daraufhin eine Verzweigung zu einer Dienstesteuerungseinheit eines intelligenten Netzes initiiert und dabei die bisherige Mobilteilnehmerrufnummer mitsendet. Die Dienstesteuerungseinheit ersetzt die bisherige Mobilteilnehmerrufnummer durch eine im neuen Mobil-Kommunikationssystem benutzbare neue Mobilteilnehmerrufnummer und sendet sie zur Vermittlungseinrichtung zurück, die anhand der neuen Mobilteilnehmerrufnummer die Anrufverbindung in das neue Mobil-Kommunikationssystem aufbaut. Dadurch unterstützt das bisherige Mobil-Kommunikationssystem die Rufnummernportabilität zu dem anderen Mobil-Kommunikationssystem und gewährleistet dies durch Speicherung einer Steuerinformation für den mobilen Teilnehmer, die zu der Verzweigung in das intelligente Netz mit der Dienstesteuerungseinheit führt. Der Signalisierungsaufwand ist sehr gering und basiert auf dem Abfrage-Antwort-Prinzip der Interrogation der Datenbasis im bisherigen Mobil-Kommunikationssystem. Die Vorteile sind die Erreichbarkeit des mobilen Teilnehmers unter seiner alten Rufnummer - trotz Registrierung in den Einrichtungen des neuen Mobil-Kommunikationssystems durch Zuweisung einer neuen Rufnummer - und die Wahlmöglichkeit, dem mobilen Teilnehmer diese neue Rufnummer abhängig von seinem Wunsch zusätzlich bekanntzugeben oder nicht. Der Ausstieg aus der üblichen Verbindungsbehandlung zu einer Dienstesteuerungseinheit des intelligenten Netzes hat den Vorteil, sehr flexibel und dienstebezogen die Rufnummernportabilität über einen anderen Netzknoten unabhängig von der Struktur des jeweiligen Mobil-Kommunikationssystems unterstützen zu können.

Von Vorteil ist gemäß einer Weiterbildung der Erfindung, daß eine Diensteinformation für den mobilen Teilnehmer in der Datenbasis des bisherigen Mobil-Kommunikationssystems gespeichert bleibt, die auf einen in dem intelligenten Netz nutzbaren Dienst hinweist, und als Steuerinformation für die Verzweigung zur Vermittlungseinrichtung gesendet wird. Dabei kennzeichnet die Diensteinformation gemäß einer vorteilhaften Ausgestaltung der Erfindung einen betreiberspezifischen Dienst oder einen anbieterspezifischen Dienst für die von einem Betreiber eines Mobil-Kommunikationssystems oder von einem Dienstenanbieter im Mobil-Kommunikationssystem bedienten mobilen Teilnehmer.

Nach einer alternativen Weiterbildung der Erfindung wird von der Datenbasis bei fehlender Registrierung des mobilen Teilnehmers eine Fehlermeldung erzeugt und als Steuerinformation zu der Vermittlungseinrichtung gesendet. Diese initiiert die Verzweigung zu einer gemeinsamen Dienstesteuerungseinheit, in der die neuen Mobilteilnehmerrufnummern aller mobilen Teilnehmer, die die Übertragbarkeit wünschen, gespeichert werden.

Vorzugsweise wird gemäß einer weiteren Ausgestaltung der Erfindung eine Adresse zur Ansteuerung der gemeinsamen Dienstesteuerungseinheit jeweils in Datenbasen, die den Vermittlungseinrichtungen zugeordnet sind, des Mobil-Kommunikationssystems gespeichert.

Das Mobil-Kommunikationssystem gemäß dem Gegenstand der Erfindung weist eine Vermittlungseinrichtung auf, die eine zum Initiieren einer Anrufverbindung zum mobilen Teilnehmer benutzte bisherige Mobilteilnehmerrufnummer empfängt und eine Anrufverbindung in das neue Mobil-Kommunikationssystem aufbaut. Darüber hinaus ist eine Datenbasis vorgesehen, die von der Vermittlungseinrichtung eine Anforderung zur Übermittlung von Routinginformationen empfängt und an Stelle der Routinginformationen eine Steuerinformation zur Vermittlungseinrichtung sendet. Zu einer Dienstesteuerungseinheit eines intelligenten Netzes wird von der Vermittlungseinrichtung bei Empfang der Steuerinformation eine Verzweigung initiiert und dabei die bisherige Mobilteilnehmerrufnummer mitgesendet. Die Dienstesteuerungseinheit verfügt über Mittel zum Ersetzen der bisherigen Mobilteilnehmerrufnummer durch eine im neuen Mobil-Kommunikationssystem benutzbare neue Mobilteilnehmerrufnummer und über Mittel zum Senden der neuen Mobilteilnehmerrufnummer zur Vermittlungseinrichtung, die anhand der neuen Mobilteilnehmerrufnummer die Anrufverbindung in das neue Mobil-Kommunikationssystem aufbaut.

Die Erfindung wird anhand von in einer Zeichnung dargestellten Ausführungsbeispielen näher erläutert. Im einzelnen zeigen
FIG 1 in einem Blockschaltbild den Informationsfluß für die Rufnummernportabilität zwischen zwei Mobil-Kommunikationssystemen bei Anwendung einer Dienstesteuerungseinheit für betreiber- oder anbieterspezifische Dienstes eines intelligenten Netzes und
FIG 2 in einem Blockschaltbild den Informationsfluß für die Rufnummernportabilität zwischen zwei Mobil-Kommunikationssystemen bei Anwendung einer gemeinsamen Dienstesteuerungseinheit für einen allgemeinen Dienst des intelligenten Netzes.

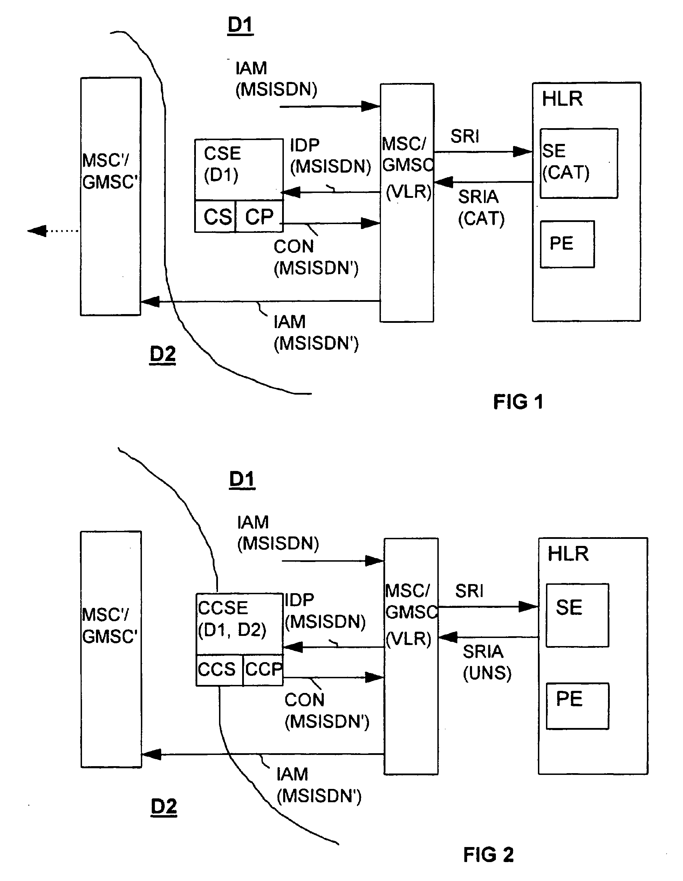

FIG 1 zeigt den Informationsfluß zwischen einem Mobil-Kommunikationssystem D1 und einem Mobil-Kommunikationssystem D2, wobei nur die für das Unterstützen der Rufnummernportabilität erforderlichen Einrichtungen dargestellt sind. Es sei angenommen, daß die beiden Mobil-Kommunikationssysteme D1 und D2 jeweils ein GSM-Mobilfunknetz in einem Land realisieren, aber von unterschiedlichen Betreibern verwaltet werden. Prinzipiell ist die Erfindung auch auf Mobil-Kommunikationssysteme mit unterschiedlichen Diensteanbietern, z.B. innerhalb eines GSM-Mobilfunknetzes, oder auf Mobil-Kommunikationssysteme verschiedener Länder anwendbar. Das prinzipielle Zusammenspiel der Komponenten und Einrichtungen eines GSM-Mobilfunknetzes ist, soweit nicht bereits in der Einleitung erläutert, allgemein bekannt und braucht an dieser Stelle nicht näher erläutert zu werden. Selbstverständlich ist die Topologie der Mobil-Kommunikationssysteme, in bzw. zwischen denen das erfindungsgemäße Verfahren ablaufen kann, nicht auf die beschriebenen Ausführungsbeispiele beschränkt.

Ein mobiler Teilnehmer vollzieht einen Wechsel von einem alten Mobil-Kommunikationssystem - z.B. D1 - ,in dem er bisher registriert ist und freigegeben wird, zu einem anderen Mobil-Kommunikationssystem - z.B. D2, das ihn aufnimmt. Der mobile Teilnehmer erhält vom neuen Betreiber oder Diensteanbieter eine Teilnehmeridentität zugewiesen, die eine SIM-Karte mit einer Identifikationsnummer (IMSI) und eine zumindest intern im neuen Mobil-Kommunikationssystem nutzbare neue Mobilteilnehmerrufnummer umfaßt. Der mobile Teilnehmer kann trotz des Wechsels seine bisherige Mobilteilnehmerrufnummer beibehalten und unter dieser Rufnummer angerufen werden, was durch das Unterstützen der Rufnummernportabilität gemäß der Erfindung erst möglich ist. Ob der Teilnehmer zusätzlich unter der neuen Rufnummer angerufen werden kann, d.h. ob sie ihm vom Betreiber bekanntgegeben wird, kann dabei vom Betreiber je nach Kundenwunsch für jeden Teilnehmer individuell entschieden werden.

Das Mobil-Kommunikationssystem D1 weist zumindest eine Vermittlungseinrichtung MSC/GMSC mit einer zugeordneten Datenbasis VLR und eine weitere Datenbasis HLR auf. Die Vermittlungseinrichtung MSC/GMSC ist entweder die für einen anrufenden mobilen Teilnehmer aktuell zuständige Mobilvermittlungsstelle MSC oder eine an der Schnittstelle zu anderen Kommunikationssystemen angeordnete Zugangs-Mobilvermittlungsstelle GMSC, die den aus dem anderen Kommunikationssystem ankommenden Anruf entgegennimmt. Im folgenden sei das Ausführungsbeispiel anhand der zuletzt genannten Mobilvermittlungsstelle GMSC beschrieben. Im GSM-Mobilfunknetz stellen die Datenbasis VLR und die Datenbasis HLR bekanntermaßen ein Besucherregister und ein Heimatregister dar. In den Registern sind u.a. die Teilnehmerdaten der registrierten mobilen Teilnehmer und deren Basis-Dienste und Zusatz-Dienste gespeichert. Das Heimatregister HLR verfügt dabei über Speichermittel SE und Steuerungsmittel PE. Die Kommunikation zwischen der Mobilvermittlungsstelle GMSC und dem Heimatregister HLR erfolgt nach dem mobilfunkspezifischen Anwenderteil MAP des zentralen Zeichengabesystems Nr. 7 (CCS7). Die Vermittlungseinrichtungen kommunizieren untereinander nach dem ISDN-Benutzerteil (ISUP) des zentralen Zeichengabesystems Nr. 7. Vom neuen Mobil-Kommunikationssystem D2 ist nur die entsprechende Vermittlungseinrichtung MSC'/GMSC an der Schnittstelle zum Mobil-Kommunikationssystem D1 dargestellt. Sie veranlaßt den Aufbau der Anrufverbindung zum mobilen Teilnehmer, sobald ihr die Informationen vom bisher zuständigen Mobil-Kommunikationssystem D1 nach Unterstützen der Rufnummernportabilität zur Verfügung stehen.

Darüber hinaus weist das Mobil-Kommunikationssystem D1 eine Verbindung zu einem intelligenten Netz mit zumindest einer Steuerungseinheit CSE auf. Die Kommunikation läuft über die Mobilvermittlungsstelle MSC/GMSC, die einen Hinweis zum Ausstieg aus der üblichen Verbindungsbehandlung des Anrufs erhält und daraufhin die Anrufverarbeitung zu der Dienstesteuerungseinheit CSE verlagert. In der Dienstesteuerungseinheit CSE sind zumindest Speichermittel CS und Steuermittel CP vorgesehen. Im vorliegenden Beispiel werden durch die Dienstesteuerungseinheit CSE betreiberspezifische oder anbieterspezifische Dienste nur im Mobil-Kommunikationssystem D1 unterstützt. Dabei handelt es sich beispielsweise um den CAMEL-Dienst (Customized Application for Mobil network Enhanced Logic), bei dem die obigen Dienste auch über Netzgrenzen hinweg den beweglichen Teilnehmern zur Verfügung gestellt werden können.

Die Mobilvermittlungsstelle GMSC empfängt eine Verbindungsaufbauanforderungsnachricht IAM, die die bisherige Mobilteilnehmerrufnummer MSISDN enthält. Dabei wurde die Mobilteilnehmerrufnummer MSISDN von einem Anrufer gewählt, um die Anrufverbindung zu initiieren. Durch Auswertung der Mobilteilnehmerrufnummer MSISDN adressiert die Mobilvermittlungsstelle GMSC das für den mobilen Teilnehmer geeignete Heimatregister HLR und sendet zu ihr eine Anforderungsnachricht SRI aus, in der um Übersendung von Routinginformationen für die Anrufverbindung zum mobilen Teilnehmer gebeten wird. Zum Unterstützen der Rufnummernportabilität bleibt in den Speichermitteln SE des bisherigen Mobil-Kommunikationssystem D1, obwohl nicht mehr zuständig für den Teilnehmer, zumindest eine Information teilnehmerbezogen eingetragen. Diese Information signalisiert der Mobilvermittlungsstelle GMSC, daß eine vom üblichen Ablauf abweichende gesonderte Behandlung der Anrufverbindung durchzuführen ist, nämlich die Anrufverbindung zu dem anderen Mobil-Kommunikationssystem D2 aufzubauen ist. Durch die Einbeziehung eines IN-Dienstes (Intelligent Network) kennzeichnet in den Speichermitteln SE eine Diensteinformation CAT den bisherigen Teilnehmer. Diese Diensteinformation CAT wird vom Heimatregister HLR nach dem Auslesen durch die Steuermittel PE als Steuerinformation für die Mobilvermittlungsstelle GMSC in einer Antwortnachricht SRIA zurückgesendet. Die Mobilvermittlungsstelle GMSC erkennt am Empfang der Steuerinformation, daß nicht das Routen der Anrufverbindung - wie üblicherweise - im Mobil-Kommunikationssystem D1, sondern eine Sonderbehandlung zu erfolgen hat. Die Sonderbehandlung besteht aus der Verzweigung zur Dienstesteuerungseinheit CSE, indem eine initiierende Nachricht IDP mit der bisherigen Mobilteilnehmerrufnummer MSISDN dorthin gesendet wird. Die z.B. in den Steuermitteln CP realisierte Dienstelogik analysiert die eingetroffene Rufnummer und ersetzt sie durch eine neue Mobilteilnehmerrufnummer MSISDN', die für den mobilen Teilnehmer im neuen Mobil-Kommunikationssystem D2 festgelegt und zumindest intern nutzbar ist. Zu diesem Zweck ist in den Speichermitteln CS diese neue Rufnummer eingetragen. Die Dienstelogik der Dienstesteuerungseinheit CSE erzeugt eine Verbindungsnachricht CON, in der die neue Mobilteilnehmerrufnummer MSISDN' zur Mobilvermittlungsstelle GMSC übertragen wird. Da eine gegenüber der ausgesendeten Rufnummer modifizierte Rufnummer empfangen wird, führt die Mobilvermittlungsstelle GMSC die Anrufverbindung zum mobilen Teilnehmer über das neue Mobil-Kommunikationssystem D2 fort. Sie erzeugt eine Verbindungsaufbauanforderungsnachricht IAM mit der Mobilteilnehmerrufnummer MSISDN' als Inhalt und übermittelt sie zur Mobilvermittlungsstelle MSC'/GMSC' im neuen Mobil-Kommunikationssystems D2. Will der Teilnehmer nochmals einen Wechsel vornehmen und seine Mobilteilnehmerrufnummer erneut behalten, wird dies wiederum dem Betreiber/Diensteanbieter des bisherigen Mobil-Kommunikationssystems D1 signalisiert, der daraufhin die in den Speichermitteln CS der Dienstesteuerungseinheit CSE eingetragenen Information zu der neuen benutzbaren Rufnummer abändert.

FIG 2 zeigt den Informationsfluß zwischen dem Mobil-Kommunikationssystem D1 und dem Mobil-Kommunikationssystem D2, die jeweils dieselben Einrichtungen wie zu FIG 1 beschrieben aufweisen. Im Gegensatz zur Struktur von FIG 1, die ein Unterstützen der Rufnummernportabilität durch eine betreiberbezogene Dienstesteuerungseinheit gekennzeichnet ist, besteht auch die Möglichkeit, daß ein allgemeiner IN-Dienst zur Rufnummernportabilität genutzt wird. Daher ist in FIG 2 eine gemeinsame Dienstesteuerungseinheit CCSE - im vorliegenden Beispiel für beide Mobil-Kommunikationssysteme D1 und D2 - vorgesehen. Sie weist ebenfalls Speichermittel CCS und Steuermittel CCP in Form einer Dienstelogik auf. Mit der gemeinsamen Dienstesteuerungseinheit CCSE kann darauf verzichtet werden, im Heimatregister HLR einen Teilnehmereintrag zu belassen, da alle für die mobilen Teilnehmer, die die Rufnummernportabilität wünschen, erforderlichen Informationen in der Dienstesteuerungseinheit CCSE vorliegen. Diese Informationen bestehen im einfachsten Fall aus den teilnehmerbezogenen Mobilteilnehmerrufnummern für das neue Mobil-Kommunikationssystem.

Die Mobilvermittlungsstelle GMSC empfängt eine Verbindungsaufbauanforderung IAM, die die bisherige Mobilteilnehmerrufnummer MSISDN enthält, und sendet die Anforderungsnachricht SRI zum Heimatregister HLR. Da kein Eintrag für den Teilnehmer im Heimatregister HLR mehr besteht, d.h. eine Registrierung fehlt, erzeugt das Heimatregister HLR eine Fehlermeldung UNS, die z.B. den Inhalt "unbekannter Teilnehmer Rufnummer" hat. Die Anforderungsnachricht SRI wird nicht mit Routinginformationen, sondern mit der Fehlermeldung UNS in der Antwortnachricht SRIA beantwortet. Diese Information signalisiert der Mobilvermittlungsstelle GMSC, daß eine vom üblichen Ablauf abweichende gesonderte Behandlung der Anrufverbindung durchzuführen ist, nämlich die Anrufverarbeitung zu dem allgemeinen IN-Dienst in der gemeinsamen Dienstesteuerungseinheit CCSE zu verzweigen ist. Die Sonderbehandlung startet durch die initiierende Nachricht IDP mit der bisherigen Mobilteilnehmerrufnummer MSISDN. Die z.B. in den Steuermitteln CCP realisierte Dienstelogik analysiert die eingetroffene Rufnummer und ersetzt sie durch eine neue Mobilteilnehmerrufnummer MSISDN', die für den mobilen Teilnehmer im neuen Mobil-Kommunikationssystem D2 festgelegt und zumindest intern nutzbar ist. Zu diesem Zweck ist in den Speichermitteln CS diese neue Rufnummer eingetragen. Die Dienstelogik der gemeinsamen Dienstesteuerungseinheit CCSE erzeugt die Verbindungsnachricht CON, in der die neue Mobilteilnehmerrufnummer MSISDN' zur Mobilvermittlungsstelle GMSC übertragen wird. Da eine gegenüber der ausgesendeten Rufnummer modifizierte Rufnummer empfangen wird, führt die Mobilvermittlungsstelle GMSC die Anrufverbindung zum mobilen Teilnehmer über das neue Mobil-Kommunikationssystem D2 fort. Sie erzeugt eine Verbindungsaufbauanforderungsnachricht IAM mit der Mobilteilnehmerrufnummer MSISDN' als Inhalt und übermittelt sie zur Mobilvermittlungsstelle MSC'/GMSC' im neuen Mobil-Kommunikationssystems D2. Will der Teilnehmer nochmals einen Wechsel vornehmen und seine Mobilteilnehmerrufnummer erneut behalten, wird dies wiederum dem Betreiber/Diensteanbieter des bisherigen Mobil-Kommunikationssystems D1 signalisiert, der daraufhin die in den Speichermitteln CS der Dienstesteuerungseinheit CSE eingetragenen Information zu der neuen benutzbaren Rufnummer abändert. Zur Fortsetzung der Anrufverbindung zum mobilen Teilnehmer im neuen Mobil-Kommunikationssystem D2 wird dann die für ihn registrierte Mobilteilnehmerrufnummer MSISDN' verwendet.

## Patentansprüche

1. Verfahren zum Unterstützen der Übertragbarkeit einer Mobilteilnehmerrufnummer bei einem Wechsel eines mobilen Teilnehmers von einem bisherigen Mobil-Kommunikationssystem (D1), das den registrierten mobilen Teilnehmer freigibt, zu einem neuen Mobil-Kommunikationssystem (D2), das den mobilen Teilnehmer aufnimmt, bei dem
- die zum Initiieren einer Anrufverbindung zum mobilen Teilnehmer benutzte bisherige Mobilteilnehmerrufnummer (MSISDN) von einer Vermittlungseinrichtung (MSC/GMSC) des bisherigen Mobil-Kommunikationssystems (D1) empfangen und zumindest für eine Abfrage einer Datenbasis (HLR), von der Routinginformationen für die Anrufverbindung angefordert werden, benutzt wird,
- die Vermittlungseinrichtung (MSC/GMSC) bei Empfang einer Steuerinformation von der Datenbasis (HLR) an Stelle der Routinginformationen eine Verzweigung zu einer Dienstesteuerungseinheit (CSE, CCSE) eines intelligenten Netzes initiiert und dabei die bisherige Mobilteilnehmerrufnummer (MSISDN) mitsendet, und bei dem
- die Dienstesteuerungseinheit (CSE, CCSE) die bisherige Mobilteilnehmerrufnummer (MSISDN) durch eine im neuen Mobil-Kommunikationssystem (D2) benutzbare neue Mobilteilnehmerrufnummer (MSISDN') ersetzt und zur Vermittlungseinrichtung (MSC/GMSC) zurücksendet, die anhand der neuen Mobilteilnehmerrufnummer (MSISDN') die Anrufverbindung in das neue Mobil-Kommunikationssystem (D2) aufbaut.

2. Verfahren nach Anspruch 1, bei dem
eine Diensteinformation (CAT) für den mobilen Teilnehmer in der Datenbasis (HLR) des bisherigen Mobil-Kommunikationssystems (D1) gespeichert bleibt, die auf einen in dem intelligenten Netz nutzbaren Dienst hinweist, und als Steuerinformation für die Verzweigung zur Vermittlungseinrichtung (MSC/GMSC) gesendet wird.

3. Verfahren nach Anspruch 2, bei dem
durch die Diensteinformation (CAT) ein betreiberspezifischer Dienst oder ein anbieterspezifischer Dienst für die von einem Betreiber eines Mobil-Kommunikationssystems oder von einem Dienstenanbieter im Mobil-Kommunikationssystem bedienten mobilen Teilnehmer **gekennzeichnet** wird.

4. Verfahren nach Anspruch 1, bei dem
von der Datenbasis (HLR) bei fehlender Registrierung des mobilen Teilnehmers eine Fehlermeldung (UNS) erzeugt und als Steuerinformation zu der Vermittlungseinrichtung (MSC/GMSC) gesendet wird, die die Verzweigung zu einer gemeinsamen Dienstesteuerungseinheit (CCSE) initiiert, in der die neuen Mobilteilnehmerrufnummern (MSISDN') aller mobilen Teilnehmer, die die Übertragbarkeit wünschen, gespeichert werden.

5. Verfahren nach Anspruch 4, bei dem
eine Adresse zur Ansteuerung der gemeinsamen Dienstesteuerungseinheit (CCSE) jeweils in Datenbasen (VLR), die den Vermittlungseinrichtungen (MSC/GMSC) zugeordnet sind, des Mobil-Kommunikationssystems (D1) gespeichert wird.

6. Verfahren nach einem der vorhergehenden Ansprüche, bei dem ein Wechsel des mobilen Teilnehmers von einem Betreiber und /oder Diensteanbieter zu einem anderen Betreiber und/oder Diensteanbieter innerhalb desselben Mobil-Kommunikationssystems (D1) oder zwischen unterschiedlichen Mobil-Kommunikationssystemen (D1, D2) erfolgt.

7. Mobil-Kommunikationssystem (D1) zum Unterstützen der Übertragbarkeit einer Mobilteilnehmerrufnummer bei einem Wechsel eines mobilen Teilnehmers von dem Mobil-Kommunikationssystem (D1), das den bisher registrierten mobilen Teilnehmer freigibt, zu einem neuen Mobil-Kommunikationssystem (D2), das den mobilen Teilnehmer aufnimmt, mit
- einer Vermittlungseinrichtung (MSC/GMSC), die eine zum Initiieren einer Anrufverbindung zum mobilen Teilnehmer benutzte bisherige Mobilteilnehmerrufnummer (MSISDN) empfängt und eine Anrufverbindung in das neue Mobil-Kommunikationssystem (D2) aufbaut,
- einer Datenbasis (HLR), die von der Vermittlungseinrichtung (MSC/GMSC) eine Anforderung zur Übermittlung von Routinginformationen empfängt und an Stelle der Routinginformationen eine Steuerinformation zur Vermittlungseinrichtung (MSC/GMSC) sendet,
- einer Dienstesteuerungseinheit (CSE, CCSE) eines intelligenten Netzes, zu der von der Vermittlungseinrichtung (MSC/GMSC) bei Empfang der Steuerinformation eine Verzweigung initiiert und dabei die bisherige Mobilteilnehmerrufnummer (MSISDN) mitgesendet wird, und mit
- Mittel (CS, CCS) in der Dienstesteuerungseinheit (CSE, CCSE) zum Ersetzen der bisherigen Mobilteilnehmerrufnummer (MSISDN) durch eine im neuen Mobil-Kommunikationssystem (D2) benutzbare neue Mobilteilnehmerrufnummer (MSISDN') und Mittel (CP, CCP) zum Senden der neuen Mobilteilnehmerrufnummer (MSISDN') zur Vermittlungseinrichtung (MSC/GMSC), die anhand der neuen Mobilteilnehmerrufnummer (MSISDN') die Anrufverbindung in das neue Mobil-Kommunikationssystem (D2) aufbaut.

8. Mobil-Kommunikationssystem (D1) nach Anspruch 7, bei dem die Datenbasis (HLR) eine Diensteinformation (CAT) für den mobilen Teilnehmer speichert, die auf einen in dem intelligenten Netz nutzbaren Dienst hinweist, und als Steuerinformation für die Verzweigung zur Vermittlungseinrichtung (MSC/GMSC) sendet.

9. Mobil-Kommunikationssystem (D1) nach Anspruch 7, bei dem eine gemeinsame Dienstesteuerungseinheit (CCSE) vorgesehen ist, in der die neuen Mobilteilnehmerrufnummern (MSISDN') aller mobilen Teilnehmer, die die Übertragbarkeit wünschen, gespeichert sind, wobei die Datenbasis (HLR) auf die Anforderung der Vermittlungseinrichtung (MSC/GMSC) eine Fehlermeldung (UNS) erzeugt und als Steuerinformation zu der Vermittlungseinrichtung (MSC/GMSC) sendet, die die Verzweigung zu der gemeinsamen Dienstesteuerungseinheit (CCSE) initiiert.

## Claims

1. Method for supporting the portability of a mobile subscriber call number when a mobile subscriber switches from a previous mobile communication system (D1) which releases the registered mobile subscriber to a new mobile communication system (D2) which accepts the mobile subscriber, wherein
- the previous mobile subscriber call number (MSISDN) used for initiating a call connection to the mobile subscriber is received by a switching centre (MSC/GMSC) of the previous mobile communication systems (D1) and used at least for an interrogation of a database (HLR) from which routing information for the call connection is requested,
- upon receiving control information from the database (HLR), instead of returning the routing information the switching centre (MSC/GMSC) initiates a branch to a service control unit (CSE, CCSE) of an intelligent network and at the same time also sends the previous mobile subscriber call number (MSISDN), and wherein
- the service control unit (CSE, CCSE) replaces the previous mobile subscriber call number (MSISDN) with a new mobile subscriber call number (MSISDN') which can be used in the new mobile communication system (D2) and sends it back to the switching centre (MSC/GMSC), which sets up the call connection into the new mobile communication system (D2) on the basis of the new mobile subscriber call number (MSISDN').

2. Method according to claim 1, wherein
service information (CAT) for the mobile subscriber remains stored in the database (HLR) of the previous mobile communication system (D1), said service information (CAT) pointing to a service which can be used in the intelligent network, and is sent as control information for branching to the switching centre (MSC/GMSC).

3. Method according to claim 2, wherein
an operator-specific service or a provider-specific service for the mobile subscriber served by an operator of a mobile communication system or by a service provider in the mobile communication system is identified by the service information (CAT).

4. Method according to claim 1, wherein
in the event of a missing registration of the mobile subscriber, an error message (UNS) is generated by the database (HLR) and sent as control information to the switching centre (MSC/GMSC), which initiates the branch to a common service control unit (CCSE) in which the new mobile subscriber call numbers (MSISDN') of all mobile subscribers wanting portability are stored.

5. Method according to claim 4, wherein
an address for accessing the common service control unit (CCSE) is stored in each case in databases (VLR) of the mobile communication system (D1) which are assigned to the switching centres (MSC/GMSC).

6. Method according to one of the preceding claims, wherein
a switch of the mobile subscriber from one operator and/or service provider to another operator and/or service provider is made within the same mobile communication system (D1) or between different mobile communication systems (D1, D2).

7. Mobile communication system (D1) for supporting the portability of a mobile subscriber call number when a mobile subscriber switches from the mobile communication system (D1) which releases the previously registered mobile subscriber to a new mobile communication system (D2) which accepts the mobile subscriber, having
- a switching centre (MSC/GMSC) which receives a previous mobile subscriber call number (MSISDN) used for initiating a call connection to the mobile subscriber and sets up a call connection into the new mobile communication system (D2),
- a database (HLR) which receives a request for transmitting routing information from the switching centre (MSC/GMSC) and instead of the routing information sends control information to the switching centre (MSC/GMSC),
- a service control unit (CSE, CCSE) of an intelligent network to which a branch is initiated by the switching centre (MSC/GMSC) upon receiving the control information and at the same time the previous mobile subscriber call number (MSISDN) is also sent, and having
- means (CS, CCS) in the service control unit (CSE, CCSE) for replacing the previous mobile subscriber call number (MSISDN) with a new mobile subscriber call number (MSISDN') which can be used in the new mobile communication system (D2) and means (CP, CCP) for sending the new mobile subscriber call number (MSISDN') to the switching centre (MSC/GMSC), which sets up the call connection into the new mobile communication system (D2) on the basis of the new mobile subscriber call number (MSISDN').

8. Mobile communication system (D1) according to claim 7, wherein the database (HLR) stores service information (CAT) for the mobile subscriber which points to a service which can be used in the intelligent network and sends said service information as control information for branching to the switching centre (MSC/GMSC).

9. Mobile communication system (D1) according to claim 7, wherein a common service control unit (CCSE) is provided in which the new mobile subscriber call numbers (MSISDN') of all mobile subscribers wanting portability are stored, the database (HLR) generating an error message (UNS) in response to the request of the switching centre (MSC/GMSC) and sending said error message (UNS) as control information to the switching centre (MSC/GMSC), which initiates the branch to the common service control unit (CCSE).

## Revendications

1. Procédé pour supporter la transférabilité d'un numéro d'abonné mobile lors d'un passage d'un abonné mobile d'un ancien système de communication mobile (D1), qui libère l'abonné mobile enregistré, à un nouveau système de communication mobile (D2) qui accueille l'abonné mobile, dans lequel
- l'ancien numéro d'abonné mobile (MSISDN), utilisé pour amorcer une liaison d'appel vers l'abonné mobile, est reçu par un équipement de commutation (MSC/GMSC) de l'ancien système de communication mobile (D1) et est utilisé au moins pour une interrogation d'une base de données (HLR) à laquelle sont demandées des informations de routage pour la liaison d'appel,
- l'équipement de commutation (MSC/GMSC), à la réception d'une information de commande de la base de données (HLR) au lieu des informations de routage, amorce un branchement vers une unité de commande de services (CSE, CCSE) d'un réseau intelligent tout en envoyant en même temps l'ancien numéro d'abonné mobile (MSISDN), et dans lequel
- l'unité de commande de services (CSE, CCSE) remplace l'ancien numéro d'abonné mobile (MSISDN) par un nouveau numéro d'abonné mobile (MSISDN') utilisable dans le nouveau système de communication mobile (D2) et le renvoie à l'équipement de commutation (MSC/GMSC) qui, à l'aide du nouveau numéro d'abonné mobile (MSISDN'), établit la liaison d'appel vers le nouveau système de communication mobile (D2).

2. Procédé selon la revendication 1, dans lequel une information sur des services (CAT) pour l'abonné mobile reste stockée dans la base de données (HLR) de l'ancien système de communication mobile (D1), laquelle se réfère à un service utilisable dans le réseau intelligent et est émise en tant qu'information de commande pour le branchement vers l'équipement de commutation (MSC/GMSC).

3. Procédé selon la revendication 2, dans lequel l'information sur les services (CAT) caractérise un service spécifique de l'exploitant ou un service spécifique du fournisseur pour les abonnés mobiles servis par un exploitant d'un système de communication mobile ou par un fournisseur de services dans le système de communication mobile.

4. Procédé selon la revendication 1, dans lequel la base de données (HLR), en l'absence de l'enregistrement de l'abonné mobile, génère un message d'erreur (UNS) et l'envoie en tant qu'information de commande à l'équipement de commutation (MSC/GMSC) qui amorce le branchement vers une unité commune de commande de services (CCSE) dans laquelle sont stockés les nouveaux numéros d'abonnés mobiles (MSISDN') de tous les abonnés mobiles qui souhaitent la transférabilité.

5. Procédé selon la revendication 4, dans lequel une adresse pour commander l'unité commune de commande de services (CCSE) est respectivement stockée dans des bases de données (VLR) du système de communication mobile (D1) qui sont affectées aux équipements de commutation (MSC/GMSC).

6. Procédé selon l'une des revendications précédentes, dans lequel un passage de l'abonné mobile d'un exploitant et/ou fournisseur de services à un autre exploitant et/ou fournisseur de services se produit au sein du même système de communication mobile (D1) ou entre différents systèmes de communication mobile (D1, D2).

7. Système de communication mobile (D1) pour supporter la transférabilité d'un numéro d'abonné mobile lors d'un passage d'un abonné mobile du système de communication mobile (D1), qui libère l'abonné mobile enregistré jusqu'alors, à un nouveau système de communication mobile (D2) qui accueille l'abonné mobile, comprenant
- un équipement de commutation (MSC/GMSC) qui reçoit un ancien numéro d'abonné mobile (MSISDN), utilisé pour amorcer une liaison d'appel vers l'abonné mobile, et établit une liaison d'appel vers le nouveau système de communication mobile (D2),
- une base de données (HLR) qui reçoit de l'équipement de commutation (MSC/GMSC) une demande de transmission d'informations de routage et envoie à l'équipement de commutation (MSC/GMSC) une information de commande au lieu des informations de routage,
- une unité de commande de services (CSE, CCSE) d'un réseau intelligent vers laquelle l'équipement de commutation (MSC/GMSC) amorce un branchement à la réception de l'information de commande et émet en même temps l'ancien numéro d'abonné mobile (MSISDN) et
- des moyens (CS, CCS) dans l'unité de commande de services (CSE, CCSE) pour remplacer l'ancien numéro d'abonné mobile (MSISDN) par un nouveau numéro d'abonné mobile (MSISDN') utilisable dans le nouveau système de communication mobile (D2) pour envoyer le nouveau numéro d'abonné mobile (MSISDN') à l'équipement de commutation (MSC/GMSC) qui, à l'aide du nouveau numéro d'abonné mobile (MSISDN'), établit la liaison d'appel vers le nouveau système de communication mobile (D2).

8. Système de communication mobile (D1) selon la revendication 7, dans lequel la base de données (HLR) stocke une information sur des services (CAT) pour l'abonné mobile, laquelle se réfère à un service utilisable dans le réseau intelligent, et l'émet en tant qu'information de commande pour le branchement vers l'équipement de commutation (MSC/GMSC).

9. Système de communication mobile (D1) selon la revendication 7, dans lequel est prévue une unité commune de commande de services (CCSE), dans laquelle sont stockés les nouveaux numéros d'abonnés mobiles (MSISDN') de tous les abonnés mobiles qui souhaitent la transférabilité, la base de données (HLR) générant, sur la demande de l'équipement de commutation (MSC/GMSC), un message d'erreur (UNS) et l'envoyant en tant qu'information de commande à l'équipement de commutation (MSC/GMSC) qui amorce le branchement vers l'unité commune de commande de services (CCSE).
